(19) **Europäisches Patentamt / European Patent Office / Office européen des brevets**

(11) **EP 4 697 650 A1**

(12) **EUROPEAN PATENT APPLICATION**

(43) Date of publication:
**18.02.2026 Bulletin 2026/08**

(21) Application number: **25160117.5**

(22) Date of filing: **25.02.2025**

(51) International Patent Classification (IPC):
***H04L 9/40*** (2022.01)

(52) Cooperative Patent Classification (CPC):
**H04L 63/107; H04L 63/1408;** H04L 63/0272;
H04L 63/0281

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.08.2024 IL 31505524**

(71) Applicants:
• **FUJITSU LIMITED**
  **Kawasaki-shi, Kanagawa 211-8588 (JP)**
• **B.G. Negev Technologies and Applications Ltd. at Ben-Gurion University**
  **8410501 Beer Sheva (IL)**

(72) Inventors:
• **SCHWARTZ, Tomer**
  **Slough, SL1 2BE (GB)**
• **MANOR, Ofir**
  **Slough, SL1 2BE (GB)**
• **OTUNG, Andikan**
  **Slough, SL1 2BE (GB)**
• **SHABTAI, Asaf**
  **8410501 Beer Sheva (IL)**
• **PUZIS, Rami**
  **8410501 Beer Sheva (IL)**

(74) Representative: **Haseltine Lake Kempner LLP**
**Cheapside House**
**138 Cheapside**
**London EC2V 6BJ (GB)**

(54) **A METHOD FOR DETECTING INTERMEDIARY CONNECTIONS IN A NETWORK**

(57) There is disclosed a computer implemented method for detecting an intermediary connection in a network comprising receiving, at a server, perceived indication information of a client device, obtaining a geolocation associated with the perceived indication information, determining a client-server value based on a transmission time of a connection signal transmitted between the client device and the server, determining an expected value associated with the geolocation, establishing that a connection between the client device and server is routed through the intermediary connection if the client-server value exceeds a threshold value, the threshold value being at least partly based on the expected value.

Figure 3

## Description

### Background

A VPN (Virtual Private Network) is a mechanism used to create a secure connection between a computer/network and another network over an insecure connection medium (usually the public internet). The connection is secured using a virtual PTP (point to point) connection to a secure server using tunnelling protocols. Through VPN usage, the original IP of the connecting client is obfuscated/hidden and the client is virtually connected to the target network.

Thus, a VPN server can run software that forwards network traffic while obfuscating the source of the communication. VPNs have many practical uses, but some can be malicious. VPN servers can be used by malicious actors to hide their identity and by spoofing the source IP of the connection, the location of client is effectively spoofed as well. Therefore, to detect/prevent spoofing of geolocation, VPN/Proxy detection is needed. VPN Detection may especially be important for services that use geolocation as a security factor such as zero trust infrastructure and fraud prevention services. The Zero Trust security global market was valued at 26.45 billion dollars and is projected it to reach 162.91 billion dollars by 2032 (https://www.emergenresearch.com/industry-report/zero-trust-security-market (accessed may. 19, 2024)), similarly the fraud detection and prevention market size was valued at 36.89 billion dollars in 2022 and is projected to grow to 182.66 billion dollars by 2030 (https://www.fortunebusinessinsights.com/industry-reports/fraud-detection-and-prevention-market-100231 (accessed may. 19, 2024)).

Client obfuscation with the use of a VPN or proxy service may be a critical weakness of IP Geolocation as a security factor. When a client is using a VPN to connect to a server, the IP observed on the server-side is the IP of the VPN and not of the client itself. This means that the geolocation of the "clients" IP address will return the location of the VPN server instead. This flaw can be used to effectively circumvent geolocation- based defences. The obfuscation can allow clients to virtually change their perceived geographical location and thus gain access to services that are geographically locked (government services, financial services, content streaming, etc). For these reasons VPN Detection is a constant and pressing issue for secure services that require high levels of trust.

Existing solutions to detect when a VPN is being used by a client generally use passive solutions which hold ranks/scores internet protocol (IP) addresses that are known to hold VPNs/Proxies. For example, existing methods may use APIs which use known IP databases as well as behavioral analysis to detect VPN/proxy usage. Some known services collect data over time and analyze communication combined with public information to create risk scores and proxy/VPN assessments. However, these methods are often not robust enough for truly sensitive services and can be bypassed.

It is therefore desirable to improve the ability for services (from a server) to detect when a VPN is being used by a client (or client device).

### Summary of invention

The invention is defined in the independent claims, to which reference should now be made. Further features are set out in the dependent claims.

According to an aspect of the invention there is provided a computer implemented method for detecting an intermediary connection in a network comprising receiving, at a server, perceived indication information of a client device; obtaining a geolocation associated with the perceived indication information; determining a client-server value based on a transmission time of a connection signal transmitted between the client device and the server; determining an expected value associated with the geolocation; and establishing that a connection between the client device and server is routed through the intermediary connection if the client-server value exceeds a threshold value, the threshold value being at least partly based on the expected value.

### Brief description of drawings

Reference is made, by way of example only, to the accompanying drawings in which:

**Figure 1a** shows an example configuration of a virtual private network in a network;

**Figure 1b** shows a client-server handshake procedure, a client-proxy handshake procedure, and a client-VPN handshake procedure.

**Figure 2** shows steps of a method for detecting an intermediary connection in a network;

**Figure 3** shows a configuration for detecting an intermediary connection in a network;

**Figure 4** shows a flow chart of steps of a method for detecting an intermediary connection in a network;

**Figure 5** shows a state diagram showing different states of a system/apparatus performing a method for detecting an intermediary connection in a network;

**Figures 6a-6f** show experimental results from using a method disclosed here;

**Figure 7** shows plots of RTT ratio between VPN/direct clients and landmark communication, aggregated over 10ms intervals;

**Figure 8** shows an architecture for implementing a method disclosed herein;

**Figure 9** shows a block diagram of an information processing apparatus or a computing device or server.

## Detailed description

The following definitions may be useful for understanding terminology used throughout the description.

IP Geolocation - may also be known as network or internet or device localization or geolocation, and is the process of finding the geographic location of a connected device on the internet. That is, IP Geolocation is the process of locating a device based on information that can be obtained or inferred using its IP address.

In the realm of internet security IP geolocation has been used both as a means of attack (profiling victims in order to lure them into an attack), or as a security factor, an idea which has gained traction in the past decade (especially in the Fraud prevention and Zero Trust markets). IP Geolocation techniques may be broadly separated into three categories: passive, active, and hybrid.

- Passive techniques leverage information that can be analysed based on the IP address alone without the need to communicate with the device directly.
- Active approaches tend to use probes to measure the delay to the target. Based on the data collected and delay to distance models, an estimation of the target device location is generated.
- Hybrid techniques combine the two methods and use prior data collection and machine learning models to improve the results of active measurements.

Probes - (also referred to as Landmarks, Beacons or Anchors) are nodes, whose locations are known, that participate in a detection process.

VPN - A virtual private network (VPN) is a mechanism for creating a secure connection between a computing device (client device) and a computer network, or between two networks, using an insecure communication medium such as the public Internet.

VPN Server/Service - A virtual private network (VPN) service provides a proxy server which may help users bypass internet censorship such as geo-blocking and users who want to protect their communications against data profiling or MitM attacks on hostile networks.

RTT - round-trip delay (RTD) or round-trip time (RTT) is the amount of time it takes for a signal to be sent plus the amount of time it takes for acknowledgement of that signal having been received. This time delay may include propagation times for the paths between the two communication endpoints. For example, the RTT may measure the time it takes for a network request to go from a starting point to a destination and back again to the starting point. The RTT duration may be measured in milliseconds (ms).

There is provided herein a computer-implemented method for detecting an intermediary connection in a network comprising: receiving, at a server, perceived indication information of a client device; obtaining a geolocation associated with the perceived indication information; determining a client-server value based on a transmission time of a connection signal transmitted between the client device and the server; determining an expected value associated with the geolocation; establishing that a connection between the client device and server is routed through the intermediary connection if the client-server value exceeds a threshold value, the threshold value being at least partly based on the expected value.

The connection signal may be referred to as a client connection signal, client originating signal, and/or control signal. The perceived indication information may be referred to as location indication signalling, location information, and/or information indicating a location.

The expected value may be an expected round trip time of a notional signal sent between the server and a notional device at the geolocation. The expected value may be determined from the geolocation and a propagation speed of the notional signal. A notional device may be a notional client device or a notional probe. A notional signal may be an example of any signal sent between the server and the notional device. The expected round trip time may be the time it takes for the notional signal to be sent from the server/notional device to the notional device/server and for an acknowledgement to be sent back to the server/notional device.

The expected value may be a server-probe value associated with a transmission time of a probing signal transmitted between the server and a probe, the probe being a closest probe to the geolocation selected from one or more probes. The one or more probes may form a probe network.

The client-server value may comprise a client-server round-trip time of the connection signal. The client-server value may be referred to as a server-client value. The client-server (or server-client) round-trip time may be the time it takes for the connection signal to be sent from the server/client device to the client device/server and an acknowledgement of the connection signal to be received by the server/client device.

The expected value may comprise a server-probe round trip time of the probing signal transmitted between the server and the probe. The server-probe round trip time may be referred to as a (probe-server round trip time). The server-probe round trip time may be the time it takes for the probing signal to be sent from the server/probe to the probe/server and an acknowledgement of the probing signal to be received by the server/probe.

The client device may a user equipment (UE), personal computer, terminal device, etc. The client device may be connected to the internet via, for example, an internet service provider.

The perceived indication information may be an internet protocol (IP) address. For example the perceived indication information may be IPv4 or IPV6 addresses.

The connection signal transmitted between the client device and the server may be at least one of a transmission control protocol (TCP) handshake signal, a secure sockets layer (SSL) handshake signal and a transport layer security (TLS) handshake signal. The connection signal may transmit TCP, SSL and/or TLS data packets.

Another connection signal may be transmitted, and the client-server value may be based on a transmission time of the another connection signal. The another connection signal may be at least one of a TLS handshake signal and an SSL handshake signal.

The connection signal may be a TCP handshake signal and the another connection signal may be at least one of a TLS handshake signal and an SSL handshake signal.

The client-server value may comprise an average round-trip time, the average client server round trip time being the average of the client-server round-trip time of the connection signal and another round-trip time of the another connection signal. The client-server value may be the longer of the client-server round-trip time and the another (client-server) round-trip time.

The connection signal may be separated into different packets and may be transmitted separately. The length of the TCP/TLS/SSL handshake may thereby be extended. Each packet may be transmitted as a separate connection signal.

The client-server value may be further associated with a cipher signal round trip time between the server and the client device. The client-server value maybe associated with the cipher signal in that the cipher signal may be considered when determining the client-server value or may be used in the client-server value.

The client-server value may be calculated from an average comprising the client-server round-trip time and the cipher signal round trip time. The client-server value may be determined as the longer of the client-server round-trip time and the cipher signal round trip time.

During cipher negotiation with the client device, the server may be configured to reject a cipher configuration suggested by the client. The server may determine a cipher round-trip time from further ciphers sent by the client device. Preferably, the further ciphers may be sent using "ChangeCipherSpec" packets.

The probing signal may be an internet control message protocol (ICMP) Ping, transmission control protocol (TCP) (handshake) signal, or transport layer security (TLS) (handshake) signal.

The expected server value may comprise a further server-probe value associated with a second probe. More than one probe may be used to determine the expected server value. The further server-probe value may be a further server-probe round trip time.

The threshold value may be determined using at least the equation:

$$[LS\_RTT+C \cdot LS\_RTT]+[(D\_cp+GE)/\omega]$$

wherein LS_RTT is the expected value, C is a constant preferably between 0 and 1, and/or C is a relative error margin of detection of LS_RTT, D_cp is a distance between the geolocation associated with the perceived indication information and the probe or the notional device, GE is a geolocation expected error associated with determining the geolocation, and $\omega$ is an expected propagation speed of a signal transmitted between the server and the client device

A confidence level associated with the threshold value may be calculated as

$$Confidence=min((CS\_RTT-LS\_RTT-[(D\_cp+GE)/\omega])/(C \cdot LS\_RTT),1)$$

or

$$\text{Confidence}=(\text{CS\_RTT-LS\_RTT}-[(\text{D\_cp+GE})/\omega])/(\text{C}\cdot\text{LS\_RTT})$$

The intermediary connection may be a virtual private network connection, a tor connection, a proxied connection or a tunneling connection.

According to another aspect there is provided herein a computer program which, when run on a computer, causes the computer to carry out a method for detecting an intermediary connection in a network comprising: obtaining a geolocation associated with the perceived indication information; determining a client-server value based on a transmission time of a connection signal transmitted between the client device and the server; determining an expected value associated with the geolocation; establishing that a connection between the client device and server is routed through the intermediary connection if the client-server value exceeds a threshold value, the threshold value being at least partly based on the expected value.

According to yet another aspect there is provided herein an information processing apparatus for detecting an intermediary connection in a network comprising a memory and a processor connected to the memory, wherein the processor is configured to: obtain a geolocation associated with the perceived indication information; determine a client-server value based on a transmission time of a connection signal transmitted between the client device and the server; determine an expected value associated with the geolocation; establish that a connection between the client device and server is routed through the intermediary connection if the client-server value exceeds a threshold value, the threshold value being at least partly based on the expected value.

Advantageously, the method described herein may increase the accuracy and speed of VPN detection. Further, the method may provide detection of private/novel VPNs (which conventional solutions may often fail to detect).

Embodiments of another aspect include a computer program which, when executed by a computer/ computing device/ teleconference device, causes the device to execute a method of an embodiment. The computer program may be stored on a computer-readable medium. The computer-readable medium may be non-transitory.

Embodiments of another aspect include a computer program which, when executed by a companion device, causes the companion device to execute a method of an embodiment. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. Other embodiments are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

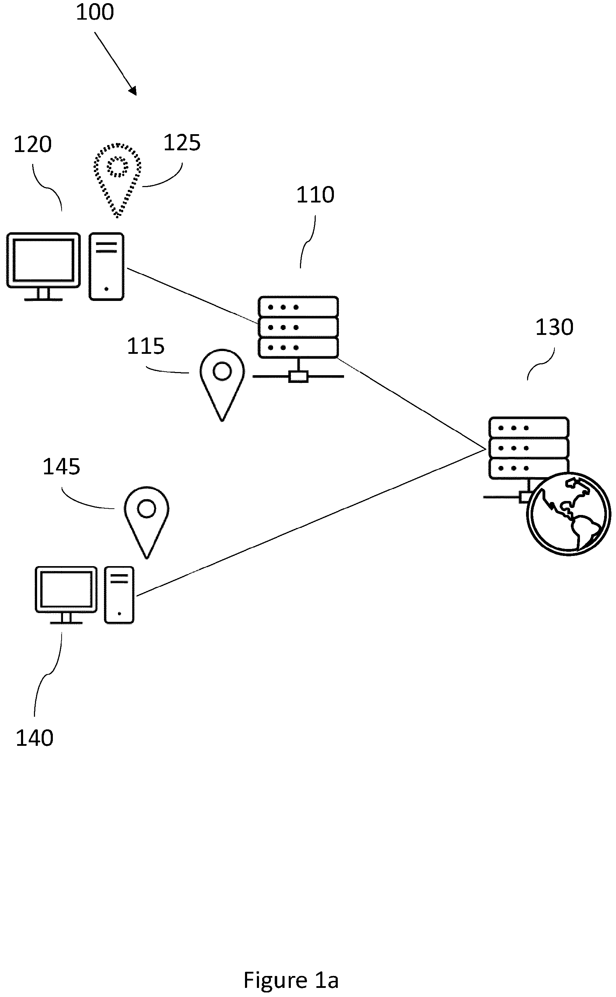

**Figure 1a** shows an example configuration 100 of a virtual private network 110 in a network. The VPN connects a client device 120 with a (web) server 130. The client device is, for example, a computer/network/any device capable of accessing the internet. A server may be any device or computer program which provides information to the client device. The information may be a "service" or "resources", for example. That is, the client device and server may function as a client-server model. The VPN may create a secure connection between the client device and the web server (which may be an insecure medium such as the internet).

The VPN may obfuscate/hide the original (true) location 125 of the client device. A device may be geolocated using the IP address associated with the device. Thus, the VPN may 'hide' the location of the client device by replacing the client device IP address with a VPN IP address. That is, the VPN may obfuscate the client device (users) true location through masking of their IP address. A web server communicating with the client device may receive the VPN IP address rather than the client device IP address. However, it would be perceived that the IP address received by the web server came from the client device. Thus, if the web server, attempted to geolocate the client device 120 using the IP address it would instead determine the location of the VPN (VPN geolocation 115). While the server is referred to as a web server in this example, of course any suitable server may be used.

Figure 1a also shows an unsecured client device 140. In this example, if the web server were to geolocate the unsecured client device using the IP address of the unsecured client device, the web server could locate the unsecured client device.

To detect the use of VPNs as an intermediary connection between a client device and server in a network, conventional techniques use behavioral analysis and IP ranking approaches. There are multiple solutions for server-side Proxy/VPN Detection, each with their own strengths and weaknesses. Only detection methods that can be implemented from the server side are considered herein. In these examples, the service being accessed is doing the detection and only has access to the communication from the client after it has passed through the VPN/Proxy.

The known solutions may be divided into two main categories. The first is the passive approach which is commonly based on known IP databases (DBs). The DBs can include behavioral analysis data and reputation scores based on reports and passive data collection. The passive data can include raw packet capture in key junctures, offline port scanning, source analysis, etc. Some known methods include Maxmind, SEON, IPQualityScore, etc. The inventors found that these approaches require a significant amount of data and time to analyze communication establish a baseline for analysis. Passive VPN detection methods can detect VPN usage with an accuracy of up to 95-99%. However, passive detection methods require prior knowledge for detection and will likely fail on private or new VPNs until updated (as discussed below).

The second approach is an active detection approach which has multiple techniques.

Active port and service scanning: common VPN solutions/services may have default ports and protocols that can be scanned to determine if a VPN service is running on a server. When a connection is initiated on the server, a scan of the source IP can ideally determine if the client is using a VPN. The inventors found that this method is not robust because the ports and protocols used can be switched with non-default configurations and cause false negatives.

Deep Packet Inspection: VPN usage causes full encapsulation of the original packet, this fact can change the available size for data in the packet and cause a few detectable changes in the transmission control protocol (TCP) headers. Specifically, the maximum transmission unit/maximum segment size (MTU/MSS) fields in the header can shift off the norm. This limitation also causes more variance in the data size and other characteristics of the received packets over time. Deep packet inspection can be implemented on the server using any sniffing tool (i.e. a tool for capturing data sent between a client device and server). However, the inventors identified multiple issues with this approach. The TCP field anomalies can be (and have been) solved with simple configuration/implementation changes. The packet content anomalies are not consistent and require a significant number of packets as well as complex machine learning models to identify with sufficient accuracy.

Delay and RTT measurement: Delay anomaly measurements have been implemented to detect proxies (proxy servers), using RTT measurement of the TCP handshake compared to either the TLS Handshake or application layer communication. Other more intrusive methods can include running JavaScript code that generates new connections to the server (or multiple servers). This technique has proven effective at detecting proxies but has failed to consistently detect VPNs. This is caused by the fact that in a VPN service with no extensions (as discussed previously) the entire communication is encapsulated causing no significant differences in RTT measurement of different protocols or applications.

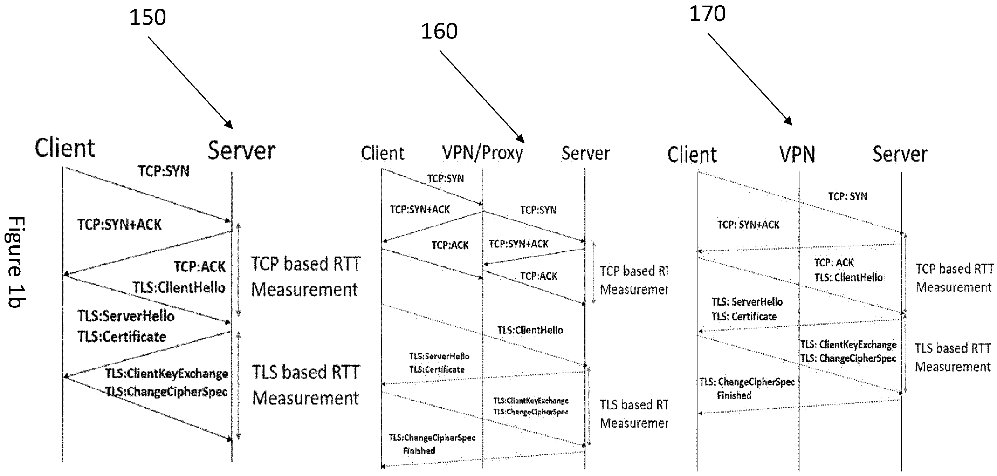

A known approach for proxy detection developed by Elisa Chiapponi et al (Chiapponi, E., Dacier, M., Thonnard, O., Fangar, M., Rigal, V. (2022). BADPASS: Bots Taking ADvantage of Proxy as a Service. In: Su, C., Gritzalis, D., Piuri, V. (eds) Information Security Practice and Experience. ISPEC 2022. Lecture Notes in Computer Science, vol 13620. Springer, Cham.) uses the difference in the round-trip time (RTT) of TCP and TLS handshakes to determine if a proxy is being used. This method can detect the use of Proxies with an accuracy of up to 99%, however it cannot detect VPNs or proxies that do not "break" the TCP connection which doesn't always happen in VPN connections; ; such as any VPN solution that implements the core OpenVPN protocol(see Figure 1b).

Previous methods (Hoogstraaten, H.: Evaluating server-side internet proxy detection methods (Msc Thesis) (2018), A. T. Webb and A. L. Narasima Reddy, "Finding proxy users at the service using anomaly detection," 2016 IEEE Conference on Communications and Network Security (CNS), Philadelphia, PA, USA, 2016, pp. 82-90, doi: 10.1109/CNS.2016.7860473) have also proposed the use of HTML tags which generate additional consecutive connections to measure multiple RTTs. These methods require alteration of the site on the server which is not ideal for non-disruptive deployment. Furthermore, the method proposed in Webb et al requires significant training and data for detection and doesn't solve the issue of VPN detection for the same issue of the VPN tunnel not necessarily breaking the TCP connection.

Furthermore, the inventors found that when using the above existing approaches, new or private use VPN will initially not be detected and may take a relatively long time to detect (if at all). Furthermore, VPN services can adapt to this analysis method and change their behaviour/location/IP periodically and avoid detection with minimal effort. For example, a malicious cyber security attack will, in most instances, hide its origin location. One of the best, and most effective, ways to do that is through VPN usage and ideally through a private VPN Server not originating from a well-known VPN Service. In this case, behavioural analysis and IP ranking will have close to no information to analyse on first use and will be practically useless in detecting this kind of VPN usage.

Further IP geolocation limitations of known techniques are as follows. Passive geolocation techniques require extensive amounts of ground-truth data to reach sufficient accuracy. Active techniques require significantly less data but are far more susceptible to network failures, which can cause significant errors. The inventors identified that an underlying assumption of IP Geolocation is that the IP address presented by the target device is the IP assigned to the user's device. The use of VPNs and proxies to obfuscate the client's IP renders geolocation security ineffective. This tends to be true for all IP Geolocation techniques, as both passive and active techniques rely on this underlying assumption. To compensate for this, some IP geolocation include some level of VPN / proxy detection on the server side as a countermeasure.

For the purpose of using geolocation as a security factor, a solution may be incorporated into the authentication process. Practically, the user's experience should not be (significantly) affected via loading times or false positive errors. Potentially most importantly, security standards should be kept, which requires very high accuracy as well as very fast detection speeds. These standards may disqualify the passive approach immediately, the passive method is extremely fast but requires using databases and behavioural analysis, which requires prior knowledge or significant data collection. When encountering new non-mainstream VPN servers, the passive approach may essentially always get a false negative which is unacceptable from a security perspective. Port scanning tends to be unreliable and easily circumvented as discussed above. Deep packet inspection paired with machine learning approaches show promise, but thus far have required a lot of communication flow data to be effective, which tends not to be available in a login process.

A technology application of a VPN detection method is in, for example, zero trust security models. Zero Trust security models rely on IP geolocation as an additional security factor. Specifically, multi-factor authentication (MFA) providers utilize IP geolocation to permit and deny access to certain users based on their location or implement further security restrictions when a user attempts to log in from an anomalous location. Microsoft Azure's Conditional Access policy https://learn.microsoft.com/en-us/entra/identity/conditionalaccess/location-condition (accessed February. 10, 2024) allows organizations to block users from accessing the services from countries and regions that the organization never operates from. Furthermore, the proliferation of national and multinational legislatures on data and user protection (e.g. GDPR) requires certain data to remain within certain borders.

The inventors identified the following challenges when developing a VPN detection solution that is reliable and secure:

- VPNs are purposely hidden: VPNs are purposely used to hide a clients location therefore they are constantly working to stay undetected. Through changing servers/procedures and improving security
- Accuracy: missed detections can have a severe impact on the security of the services as well as user experience
- Speed: user experience should not be effected, therefore the detection needs to be as fast as possible
- Resilience - to what extent can detections persist under the threat of attackers

**Figure 1b** shows a client-server handshake procedure 150, a client-proxy handshake procedure 160, and a client-VPN handshake procedure 170.

As described above, VPNs allow private connections over public networks. This may be implemented by encapsulation and encryption of outgoing packet data from the client, which are then unpacked on the VPN server and sent as though they originated from the VPN server. When an answer is returned to the server, it is then encapsulated, encrypted and sent back to the client. This method hides the original IP of the client from the service it is accessing or allows access to internal networks while encrypting sensitive data over public networks.

HTTPS Proxies generate secure connections over the Transport layer. Once a client connects to a proxy, all HTTPS requests are routed through the proxy server which obfuscates the clients IP. The client's requests are sent to the proxy over TCP meaning that the TCP connection is "broken" for each new connection. Thus both the client and the server generate a TCP handshake (client-proxy handshake 160).

Both VPNs and proxy servers may hide a client's IP address. However, detection of VPN communication poses unique challenges that have not been addressed by proxy detection techniques. VPNs may be viewed as proxies which function over the network layer instead of the transport layer. This means that unlike HTTPS proxies the TCP connection isn't necessarily broken. The difference between direct/Proxy/VPN handshakes is seen in Figure 1b. The core implementations of VPN servers (OpenVPN protocol RFC https://openvpn.net/communityresources/openvpn-protocol/ (accessed March. 12, 2024) for example) encapsulate and tunnel all packets generated by the client and do not break handshakes sent to the server (client-VPN handshake 170). The tunnel created is the cause of the inability of the previous solutions to detect VPN usage. Some VPN services effectively work as proxies, with broken TCP handshakes but tunneled TLS handshakes. This can be seen in use by the NordVPN (https://nordvpn.com/ (accessed February. 10, 2024)) and ExpressVPN services (https://www.privateinternetaccess.com/ (accessed February. 10, 2024). This method is a useful form of obfuscation because the RTT measured over the TCP connections is the same RTT you would measure in direct connection to the VPN server.

The above VPN servers also tend to respond to ping, meaning that the communication RTT would seem consistent with a direct RTT measurement which makes the server appear benign in a naive detection approach. VPN services with SSL decryption (usually corporate VPNs like Palo-Altos GlobalProtect) break the TLS handshake instead. Causing the TLS RTT to be shorter than the TCP RTT.

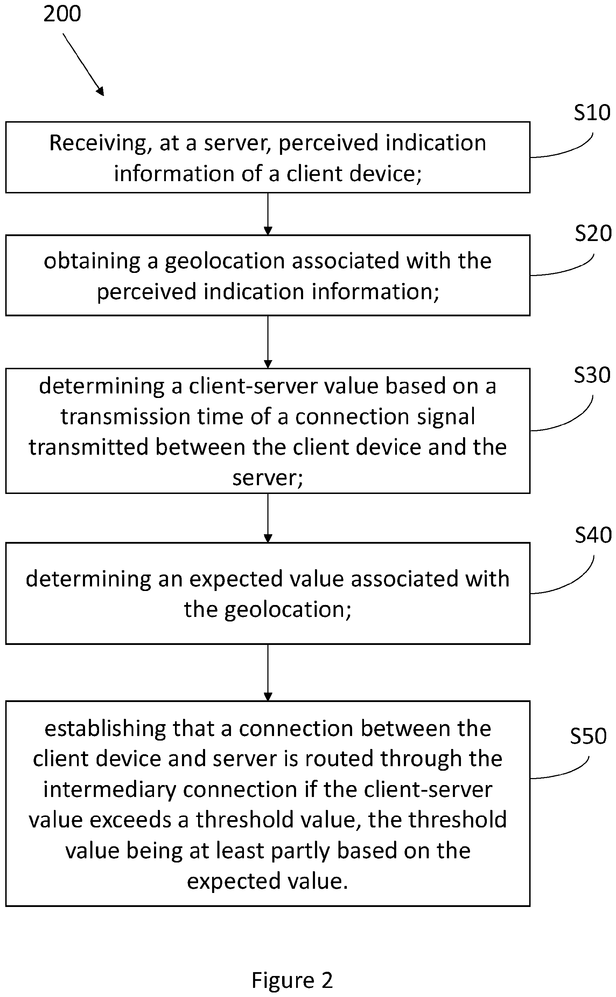

**Figure 2** shows steps of a method 200 for detecting an intermediary connection in a network. In this example, the intermediary connection may be a proxy connection such as a VPN. The method developed by the inventors diverges from the previous behavioral analysis approaches mentioned above. The method leverages objective indicators of proxied communication which may be detected immediately and consistently from the first use of a VPN server.

VPN usage creates an additional delay in communication based on the physical distance between the client and the VPN server. The method disclosed herein may detect the additional delay in responsive and unresponsive VPN server communication. That is, the method for VPN (intermediary connection) detection may use direct delay measurements of a client's communication from the server-side. VPN servers may often be configured to 'hide' and therefore be unresponsive to probing signals. The method described herein may circumvent this issue by communicating with probes which are chosen based on IP geolocation and thus will have a similar RTT to the VPN server. Additionally or alternatively, the RTT of a location may be inferred from geolocation and known propagation speeds of signals in different regions/locations.

Furthermore, as the indicators identified by the inventors are not behaviorally based, they may be virtually impossible to adapt. Considering the example of a private VPN server that is used to hide cyber-attacks, the method described herein may detect VPN usage immediately, where conventional solutions would fail or take a significant amount of time.

The method for detecting an intermediary connection in a network may comprise the following steps.

In a receiving step, S 10, a server may receive perceived indication information of a client device. The perceived indication information may be for example an IP address. The IP address may be, for example IPv4 or IPv6. In an example where an intermediary connection is active, or being used, between the client device and the server, the indication information may be information belonging to the intermediary connection. For example, indication information may be an IP address of the intermediary connection. The intermediary connection may be a VPN. Thus, the intermediary connection may be an IP address of the VPN.

In an example where the client device does not use an intermediary connection, the perceived indication information may be information belonging to the client device (client device indication information). In an example, the indication information is an IP address of the client device (a client device IP address). The indication information may be referred to as perceived indication information in that the server may not know whether the indication information originates from the client device or whether the information originates from an intermediary connection.

In an obtaining (or determining) step S20, a geolocation associated with the perceived indication information may be obtained. The geolocation may be obtained using a geolocation service. For example, the perceived indication information may be mapped onto a physical location. A geolocation database or application programming interface (API) may map indication information onto a location such as a country, region, city, latitude, longitude and so on. The geolocation database or API may be queried to obtain the geolocation associated with the indication information. In an example, the indication information is an IP address and the geolocation associated with the IP address is geolocated using IP based geolocation techniques.

In a determining step S30 a client-server value based on a transmission time of a connection signal transmitted between the server and the client device may be determined. The client-server value may be, for example, the round-trip time for the connection signal sent between the client device and the server. For example, the client may send an initial connection signal to the server. The server may send an acknowledgement (a server ACK) to client device and start a timer. The timer may be stopped when the server receives an acknowledgement (client ACK) return signal from the client device.

The connection signal may be any suitable signal with a property for determining a client-server value. For example, the connection signal may be a TCP handshake signal between the client device and the server. For example, the client device may initialize a TCP connection with the server by sending a TCP:SYN (TPC synchronize) signal. The server may send a TCP SYN + ACK signal in response to acknowledge the signal sent by the client device. The client device may send a further acknowledgment (a TCP ACK) of the signal sent by the server.

The client-server value (which may be a determined value between the client and the server or between the server and the client) may be, for example, a TCP RTT measured using the TCP handshake. The TCP RTT may be measured as the interval between the server sending the TCP SYN + ACK packet and the received client TCP ACK packet.

Following the TCP handshake, an additional (or another) connection signal may be sent. The additional connection signal may be a TLS handshake signal. The client-server value may be determined from an average of the TCP RTT and a TLS RTT or may be determined using the longer or shorter of the TCP RTT and TLS RTT signal. For example, the longer RTT may be used as it may be assumed that the signal belonging to the longer RTT reaches the client device, while the shorter RTT may have broken at a VPN. The TLS handshake may be used as follows to determine the TLS RTT. That is, the TLS handshake may be used for an additional RTT measurement. In another example the additional connection signal may be an SSL handshake signal and the client-server value may be calculated as above using an RTT of the SSL signal.

The inventors used a sniffing tool to measure the TCP and TLS(/SSL) handshakes. That is, the client-server value may be determined using a detection server. The detection server may run a sniffing tool. The detection server may receive the signals sent between the client device and the server.

During a TLS handshake, the client device may send a client "HELLO" packet to the server. The server may respond with a server "HELLO" packet. The TLS RTT may be determined as the interval between the SERVER HELLO packet sent from the server to the next TLS packet received from the client. The next TLS packet may be include, for example, either the CHANGE CIPHERSPEC or TLS APPDATA FLAG, depending on the TLS Version used in the communication. The above TCP and TLS communications are visualized in Figure 1B.

The inventors identified that both sources (TCP RTT and TLS RTT) may be used for the clients RTT measurement as (as discussed) in different implementations some of the communication is broken at the VPN/Proxy server, and not tunneled through, which may cause false negative detection if used to detect VPN usage.

The inventors found that for detection the tunneled RTT may be significantly longer than broken communication which originates from the VPN server and not the client. VPNs that break the TCP connection can be detected as proxies using previous solutions, but the inventors found that previous solutions did not provide a consistent solution that detects all VPN and proxy usage.

Four TCP and TLS RTTs may be measured from (each) client after which the median and minimal RTT may be obtained for the TCP and TLS measurements. The inventors used 4 RTT measurements but any suitable number may be used. By measuring 4 RTTs, the different VPN connection types may be addressed and errors/noise mitigated. The RTTs of the protocol with the longer median RTT may be used as the client-server value.

Additionally or alternatively, the connection signal transmitted between the server and the client device may be a secure socket link, SSL, packet (or a TLS packet depending on the version used by the web server). That is, the client device and server may perform the TCP connection as usual without an RTT being measured. The RTT measurement may begin with the TLS handshake. Depending on the VPN protocol/service for example either the TCP and/or TLS and/or SSL measurement may be used.

A plurality of connection signals may be transmitted between the server and the client device. The plurality of signals may be transmitted to ensure that the RTT is measured as many times as possible to determine, for example, a statistically significant result. To transmit the plurality of signals the length of the handshake between the server and the client device may be extended. The inventors found that the length of the handshake may be extended by separating each step of the handshake into a different packet. This differs from usual handshake techniques which try to consolidate as many steps as possible. Each packet may be transmitted as a separate connection signal.

Additionally or alternatively, the client server value may be associated with (or based on) a further TLS communication, for example a cipher signal round trip time between the server and the client device. For example, during cipher negotiation between the server and the client device, the server may be configured to reject ciphers suggested by the client. A cipher round trip time may be determined from further cipher packets sent by the client device. That is, by rejecting the cipher suggested by the client device, the client device may send further ciphers, for example "ChangeCipherSpec" instructions/packets. A round trip time may be determined from the cipher signals. The client-server value may be determined by, for example, calculating the mean round trip time from RTTs associated with the SSL packets and RTTs associated with the cipher signals. Additionally or alternatively, the client-server value may be determined from the mean of any combination of RTTs. For example, from the mean of the TCP and SSL, the TCP and TLS, the TCP and cipher, TLS and cipher, SSL and cipher, TCP and TLS and cipher and so on. Alternatively, the client-server value may be determined as the longer or shorter of the RTT signals. Thus, it would be understood that the client-server value being determined based on the transmission time of a connection signal transmitted between the client device and the server may refer to either the client-server value comprising a value associated with the connection signal (i.e. the RTT) or that the connection signal is considered in the determination but may not be used as, for example, the additional or further connection signals may be used. That is, the connection may still be used in the determination step as it may be compared with the further connection signal/additional connection signal to determine which has the longer/shorter RTT.

While TCP and TLS measurements were used to measure RTT, of course any other suitable signal may be used. For example, higher layer measurements and/or generated recursive requests may be used to measure RTT.

The client-server value may be determined on the server-side or the client-side depending on, for example, the limitation of the service. On the server-side the RTT may be determined using raw packet analysis of the TCP handshake and further TCP/TLS communication. On the client-side JavaScript may be used to communicate with the server and calculate the RTT. Using JavaScript may allow for the analysis of more communication in a controlled fashion for more accurate results.

In a determining step s40, an expected value associated with the geolocation may be determined. The expected value may be, for example, an expected round trip time for a notional signal sent between the server and a notional device at the geolocation. The expected value may be determined from the geolocation and a propagation speed of the notional signal. That is, based on the geolocation and known propagation speeds in different regions the expected RTT of the communicate may be determined.

Additionally or alternatively, the expected value may be a server-probe value associated with a probing signal transmitted between the server and a probe. The probe. The probe may be selected from one or more probes and may be the closest probe to the geolocation. Additionally or alternatively, the probe may be within a threshold distance of the geolocation. The probe may be a node, or landmark or beacon configured to communicate with the server.

As above the probe may be selected from a plurality of (available) probes. The probe may be the closest probe, from the plurality of probes, to the geolocation and may therefore be selected to communicate with the server. More than one probe may be selected. For example, 1 to 3 probes may be selected but of course any number of probes may be selected. As above, the selection of the probes may be based on their proximity to the geolocation. A method developed by the inventors used geolocated RIPE Atlas probes (Ripe Atlas probes https://atlas.ripe.net/ (accessed February. 25, 2024) to generate approximate RTT measurements to the VPN.

The expected value may comprise a server-probe round-trip time of the probing signal transmitted between the server and the probe. In an example where more than one probe is used, the expected value may be an aggregated value from each expected value of each probe. For example, the expected value may be the aggregated round trip time for each probing signal sent between the server and each probe.

The probing signal may be, for example, an internet control message protocol (ICMP) PING, TCP Handshake, or transport layer security (TLS) Handshake. The type of probing signal may depend on the protocol supported by the probe. Some protocols may be blocked in certain instances. For example, a network's security policy may require ICMP ping (ICMP echo reply) to be disabled on all devices. Thus, the ICMP ping could not be used for RTT determination. Regardless, the inventors found that the each protocol had the same or substantially the same efficacy when calculating the RTT of the probing signal sent between the server and the probe.

The inventors measured the RTT from the server to the 3 closest available landmarks using direct ICMP pings. The minimal RTT from the pings was chosen because of the stability of direct connections and to filter out slow landmarks. This measurement method may work on any successful TLS authentication and exceptions for edge cases may be easily implemented, through for example, control of the server side. Therefore, control of the client which doesn't correlate directly to the real-world use case would not cause undue bias.

In an establishing step S50, it may be established that a connection between the client device and server is routed through the intermediary connection if the client-server value exceeds a threshold value. The threshold value may be at least partly based on the expected value.

In an example, the threshold value may be the expected value. The client-server value may be compared with the threshold value and if the client-server value is greater than the threshold value it may be determined that the connection between the client device and server is routed through the intermediary connection. The threshold value may be a scaled value of the expected value. For example, the expected value may be multiplied (or divided or acted on) by a constant to generate the threshold value.

The inventors found that an effective threshold value may be defined as:

$$LS_{RTT} + C \cdot LS_{RTT} + \frac{D_{cp} + GE}{\omega} \qquad (1)$$

Where:

LS_RTT: is the aggregated RTT between the probe(s) and the server (i.e. the minimal RTT to the geolocated landmarks)

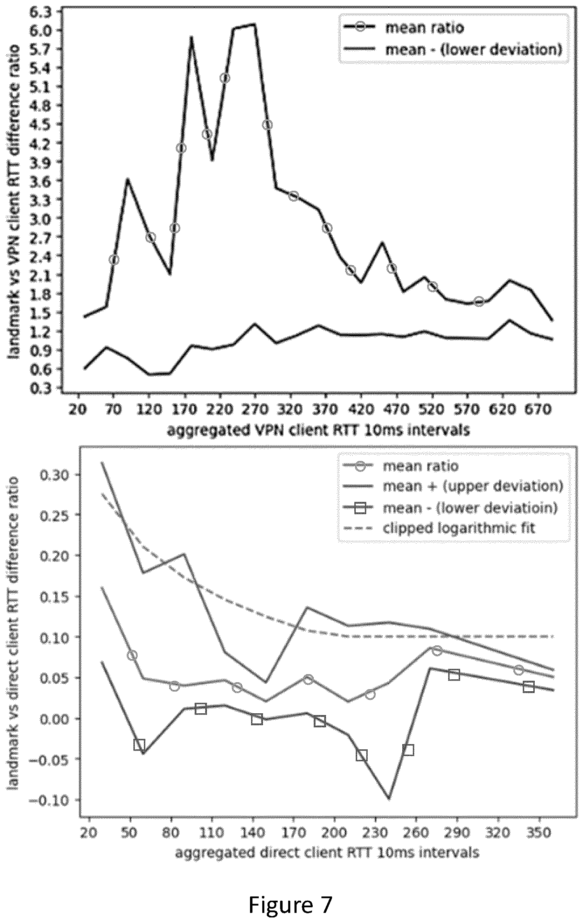

C: a constant (between 0 and 1), which may be varied depending on how strictly the threshold should be set and/or is a relative error margin of detection based on the client RTT (see Figure 7 below).

D_cp: the distance between the geolocation associated with the perceived indication information (e.g. the IP address of the intermediary connection if used) and the probe (landmarks).

GE: Geolocation expected error based on the geolocation method/service used.

$\omega$: the expected propagation speed of a signal transmitted between the server and the client device (i.e. an expected propagation speed of communication through the network), based on the geolocated region associated with the perceived indication information. There may be an expected packet travel speed of between 1/2 and 2/3 the speed of light for general communication (a general approximation). The expected propagation speed may be measured in different regions with direct measurements between probes, for example.

Thus, it may be determined that the connection between the client device and server is routed through the intermediary connection using the following equation:

$$CS_{RTT} > LS_{RTT} + C \cdot LS_{RTT} + \frac{D_{cp} + GE}{\omega} \quad (2)$$

Where $CS_{RTT}$ is either the median or minimal RTT associated with a connection signal transmitted between the server and the client device.

As described above, the constant C may be set as between 0 and 1. This may be varied depending on how strictly the threshold should be set. Alternatively, the constant may be a relative error margin of detection based on the client RTT. Details for determining the relative error margin as discussed in relation to Figure 7 below.

In this example, the client-server value (i.e., a perceived client RTT) may be significantly larger than the RTT from the closest geolocated probe(s) while accounting for the distance between the probes and the actual client/VPN Server and standard deviations.

A confidence level of the detection (i.e. decision that there is an intermediary device) may be based on the distance between the $CS_{RTT}$ and normalized distance of the process. This may be expressed using the following equation:

$$Confidence = min\left(\frac{CS_{RTT} - LS_{RTT} - \frac{D_{cp}+GE}{\omega}}{C \cdot LS_{RTT}}, 1\right) \quad (3)$$

Alternatively, the confidence value may be determined as:

$$Confidence = \frac{CS_{RTT} - LS_{RTT} - \frac{D_{cp} + GE}{\omega}}{C \cdot LS_{RTT}} \quad (4)$$

Using the above confidence equation(s), the confidence level of the detection is directly related to the number of standard deviations the difference in RTTs is equal to. The threshold value may be varied to set an acceptable level depending on certain requirements. For example, the confidence level may be used by a customer (or client or user) of a service implementing the method described here to set their own accepted levels of accuracy. The inventors generated a detection value and confidence score for both the median and the minimal RTT ($LS_{RTT}$) using the above equation. The results for both options were analysed, and the detection with the higher confidence level was then chosen, and is discussed below.

The method disclosed herein may utilize the physical limitations of communication in the internet (or other distributed networks) to determine if a VPN/Proxy is being used by the client. The RTT (Round Trip time) of communication over the internet is affected by multiple factors, including hardware, software, communication infrastructure, but usually (with modern infrastructure) the most significant factor is the actual physical distance between the client and the server. When a VPN server is used, a relatively constant and significant time may be added to the RTT of the communication which is mostly caused by the physical distance between the client and VPN server. A challenge is identifying whether that additional delay exists.

The detection method develops on approaches of passive TCP/TLS RTT measurement. The method may have minimal requirements from the server and no code running on the client. The issues of no "breaks" in the tunneled connection (i.e. TCP breaks) may be circumvented by communicating with a geolocated landmark (probe) in close proximity to the perceived location of the client. This method may enable active detection of VPN connections accurately and in real-time.

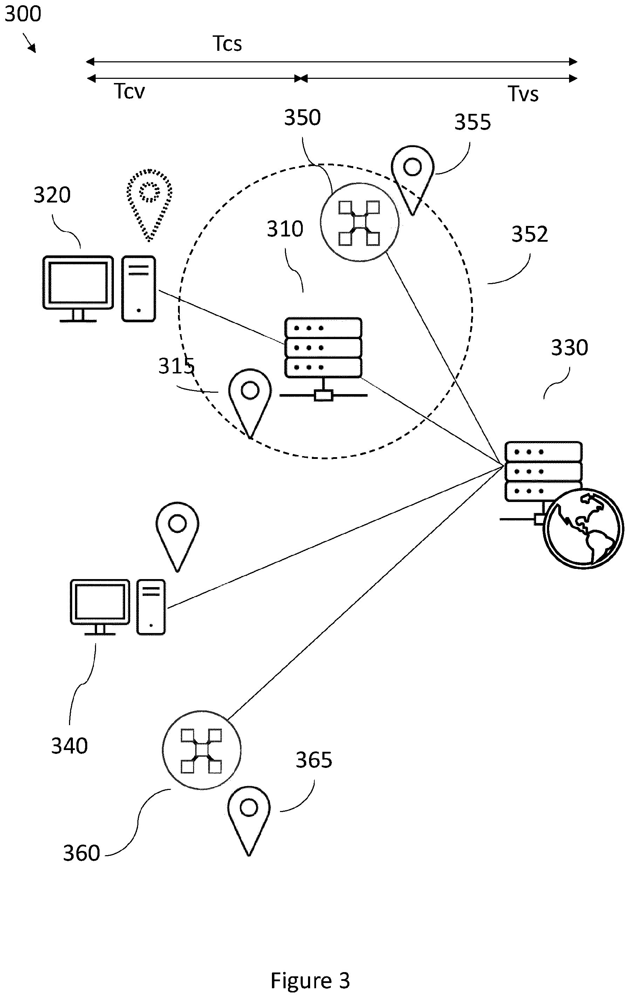

**Figure** 3 shows a configuration 300 for detecting an intermediary connection 310 in a network. In this example, the intermediary connection may be a proxy connection such as a VPN.

As described above, communication through a VPN server may create an additional delay based on the distance between a client (which may be referred to as a secure client 320) and the VPN Server and the distance between the VPN server and the server (e.g. web server 330). The RTT may therefore be significantly increased. The inventors found that the expected RTT from communicating with the IP of the VPN server (i.e. the geolocation of the VPN, VPN geolocation 315) may be significantly smaller than the one measured when a client (secured client) is hidden behind the server. On the other hand, when the client (unsecured client 340) is communicating directly with the server no such additional RTT may exist.

A possible attempt to measure if the difference in RTT exists is to communicate directly with the VPN Server (or client if no VPN is used), is to measure the RTT of the communication and compare to the communication originating from the client. However, the inventors identified that a problem with this method is that VPN servers (especially malicious ones) often actively try to obfuscate their status and therefore will block all communication. This means that direct measurement of the VPN server RTT may essentially be impossible.

The method disclosed herein may work around this potentially crucial issue. The inventors found that an effective assumption to make was that, with todays advanced technology, the main contributors to the RTT between a client and VPN and from the VPN to the server are physical constraints, especially the physical distance the packets are required to travel.

In the vast majority of cases (e.g., where the client and server are far from each other) hardware/software limitations may be negligible in the RTT calculation. Based on these assumptions, to approximate the RTT (to an acceptable level) from the VPN server/client to the server, a trustworthy machine (a probe 350, 360) that is geographically close to the VPN/client may be used. In this case geographically close may be within the same town, or city or country or within a set distance (such as a radius) such as 10km, 100km, 500km, 1000km and so on.

The inventors found that a perceived location of the client (which may be a true location or the location of an intermediary connection if being used), may be determined using IP geolocation. State of the art IP geolocation solutions may reach city level accuracy which the inventors found is more than sufficient for detecting intermediary connections in a network. A VPN Server is generally used to hide the true location of a client, meaning a VPN server in another country or at least another city would likely be being used. Once the communicating IP address (i.e. the perceived indication information) is geolocated, one or more probes may be deployed which are closest to the location. A probe may be deployed if it is within a threshold distance 352 (shown as a notional dashed circle in the figure) of the geolocation. As above a threshold distance may be 10 km or 50km or 100 km, for example.

The probes 350, 360 may have a known location 355, 366 and may be distributed thought a city, country and/or the World.

When looking at client communication to a web server through a VPN, the communication may be divided into 3 sections:

Tcs is the full delay from the client to the server.
Tcv is the delay from the client to the VPN.
Tvs is the delay from the client to the VPN where essentially Tcs = Tcv + Tvs and when no VPN is used Tcv = 0.

In an attempt to measure Tvs, the expected result would be the same result as Tcs. Taking from the server side, access to Tcv would be very unlikely. In the detection process an attempt may be made to essentially prove that Tcv has a non-zero value. This may be proven with measurements of Tcs and Tcv.

To measure Tcs, the TCP and TLS handshake RTTs were measured. VPNs try to hide or obfuscate their presence as much as possible. There are multiple ways that this is done, but a simple method is that the servers just ignore all unrecognized incoming communication. A naive approach to actively measure the RTT from the server to the VPN would be to simply ping it. However, even when the server answers ping requests, the RTT measurement isn't necessarily trustworthy.

With full control of the VPN server, delays can be spoofed to match the clients or randomized. To solve the issue of intentional obfuscation by the VPN, the inventors implemented a method to measure the expected delay difference indirectly using trustworthy sources. A baseline assertion was that with modern network infrastructure and endpoint hardware the network delay is almost entirely dictated by the physical distance between the communicating network endpoints (in this example these are the client, VPN and web server). When a significant difference in the RTT between Tcs and Tvs is measured, it may be detected that a client is further away from the server than is indicated by its IP address. Therefore, if this assertion holds true, the delay measurement from landmarks geographically close to the VPN, and the detection server will produce very similar results to the expected Tvs value.

With current passive geolocation technologies the inventors found that city level accuracy may be expected for most urban areas and country/region level accuracy for the rest (mismatch of country is quite rare). Using passive IP geolocation on the perceived clients IP will generally return a good approximation (an expected error of 100-200km was found to be almost negligible in its effect on delay measurement in an international scale) of either the clients or VPNs geolocation. With the returned geolocation a ground truth service like RIPE Atlas may be used to find geographically close landmarks. These landmarks (probes) may be pinged directly and with the measured RTT, an acceptable approximation of Tvs may be obtained.

As described above the probes may be used to measure the RTT between the probes (/proxy) and the server (server-probe RTT, Tvs). If a significant difference (determined using for example Equation 2) exists between the client communication RTT (client-server RTT, Tcs) and the probes RTT then it may be determined that an intermediary connection (i.e., a VPN communication) is being used (i.e. has been detected). For example, if Tcs >> Tvs it may be determined that a VPN has been used. If Tcs ≈ Tvs then it may be determined that no VPN has been used.

The inventors found that two type of probe may be used to utilize the geolocation information.

1. Active probes: may utilize a network of geolocated probes which may be controlled, and from those probes generate communication to calculate the RTT between the server and probe.

2. Landmarks: these machines are geolocated machines that are considered trustworthy and can be communicated with directly (can be viewed as passive probes).

Additionally or alternatively, an inference based technique may be used to determine an expected round trip time. The expected round trip time may be thought of as the round trip time of a notional signal sent between the server and a notional device (or notional probe) at the geolocation. The expected round trip time may be determined from the geolocation and a propagation speed of the notional signal. That is, for example a database may store expected round trip times for signals sent from the server to regions/locations. Based on the geolocation and known propagation speeds in different regions the expected RTT of the communication may be inferred and the expected RTT may be compared with the perceived RTT using equation 2. As above, if a significant difference (Equation 2) exists between the client communication RTT and the inferred RTT, then it may be determined that an intermediary connection (i.e., a VPN communication) is being used (i.e. has been detected).

In an example, a method disclosed herein may run a detection server alongside any running server/service (e.g. web server) with permission to run a 'sniffing tool'. The method for detecting VPN usage may comprise the following steps:

1) The client initializes communication to the web server. The initial communication is analyzed to calculate the full delay from the client to the server which is defined as Tcs above. The RTT is measured using TCP and/or TLS handshakes (as described above).
2) The clients IP is geolocated and nearby probes/landmarks are located using, for example the RIPE ATLAS API. The 3 geographically closest responding probes (landmarks) may be chosen.
3) The RTT to the landmarks is measured using ping (and/or other probing signals) and aggregated to generate a good estimation of Tvs.
4) A determination is reached using the measured

RTTs with error margins calculated based on the measured Tcs value.

Both the TCP and TLS handshake RTTs may be measured multiple times per client. Multiple requests may be triggered when accessing the web server from base image/JavaScript tags. The base image/JavaScript tags are expected parts of any website, with the additional assumption that the requested artifacts are uncached (additional requests may be triggered with additional tags including img/javascript/iframe etc).

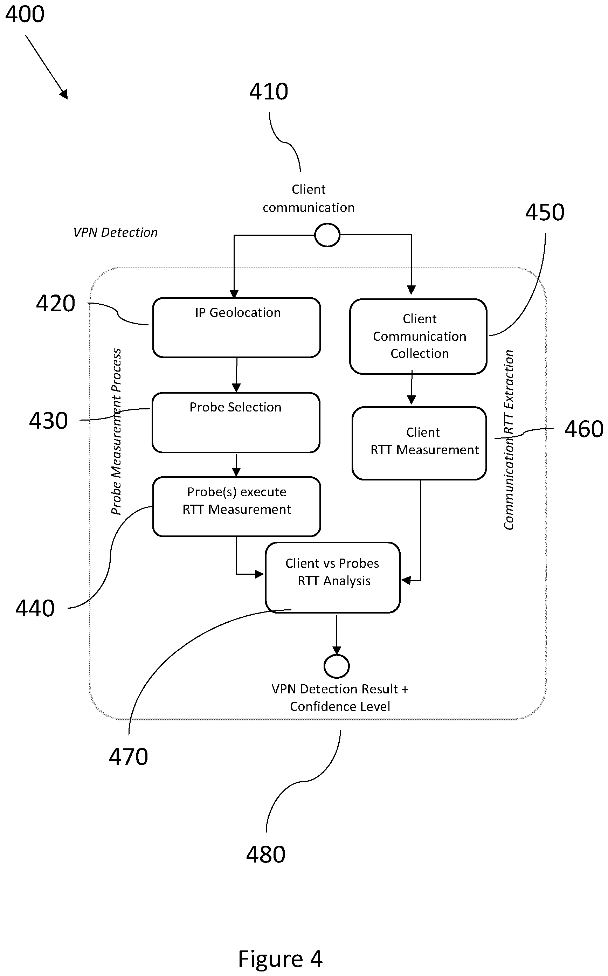

**Figure 4** shows a flow chart 400 of steps of a method for detecting an intermediary connection in a network. In this example, the intermediary connection is a VPN connection between a client device (internet computer) and a server. That is, the client device may route data through the intermediary connection when communicating with server. The client device may be a 'host' device and may be referred to as a client if it runs an application (such as a web browser, email agent, etc) and requests a service from a server. The intermediary connection may be a host device and may be referred to as an intermediary connection if it accepts a request from a client and forwards the request to another host device (which may be a server). A server may be a host device and may be referred to as a server if it provides an (internet) service to a client. The skilled person would understand that the client device may indirectly connect to the server (for example a web server) by first connecting to a network (a connected network) which is connected to the internet. The connected network may then grant access to the internet to the client device.

In client communication block 410 an initial communication between the client and server may be performed (or set-up). For example, a client device (or intermediary connection if being used) may query the server. The query may be a request for information or data, for example or may be a TCP handshake request. The server may obtain perceived indication information from the client device. For example, the server may obtain an IP address associated with the client device.

In an IP geolocation block 420, a geolocation associated with the IP address may be determined/ obtained. The geolocation of the client (or intermediary connection) may be determined using a geolocation service. For instance, the geolocation may be obtained by querying a look-up table with IP addresses and locations associated with the IP addresses. Different geolocation services may be available, the most appropriate, or available, geolocation service available may be used. Based on the geolocation method used, an expected error range of the location result may be determined or ascertained.

In a probe selection block 430, based on the geolocation of the indication information, a database containing the location of probes may be searched and a probe/probes nearest the geolocation may be selected. For example, 1-3 probes may be selected. The closest available probes may be selected based on geographical distance calculations and/or availability tests. As reliable connection and trusted source (with regard to security and accurate locations, for example) for the probe may be required, the probe may belong to a private collection of probes and may be from a trusted source such as RIPE atlas.

In a probe(s) execute RTT measurement block 440, an expected value associated with the obtained geolocation may be determined. In this example, the expected value is a round trip time for a signal sent between the server and the probe. Depending on the probes support for different protocols the RTT may be measured using ICMP PING/TCP Handshake/TLS Handshake. The expected value measurement may be initiated by the probes or the server. The measurement may be initiated by the probe depending on the control of the probe and whether the probe is considered a trustworthy probe. Under the assumption that the probes are trustworthy the result would be expected to be the same if the measurement was initiated by the probe or the server.

In a client communication collection block 450, data packets (e.g. signals) may be transmitted between the server and the client device (or intermediary connection). The signals may be used in the client RTT measurement block 460 described below. A VPN/intermediary connection may be configured to block any probing signals. The inventors found that packets which will almost certainly (i.e. if a connection exists between the client device and server through a network) reach the client device are SSL handshake packets. Thus, the client communication collection block may comprise receiving SSL connection signals form the client device and waiting for an acknowledgement/negative-acknowledgement (ACK/-NACK) signal in return to the server sending an SSL signal to the client device.

The client device may be further probed by rejecting a cipher negotiating between the client device and the server, therefore triggering the client device to send further cipher packets/information.

In a client RTT measurement block 460, a client-server value associated with the connection signal transmitted between the server and the client device may be determined. In this example, the client-server value is a round trip time associated with the connection signal. A connection signal may be sent from the client to server and an ACK/NACK may be sent from the server to the client as a response. The time taken from sending a signal from the server and receiving a signal back from the client (e.g. an ACK/NACK response) may be analyzed to calculate the RTT from the client to the server. That is, in the client RTT measurement block analysis of the communication between the client device and server may be performed to determine the RTT.

The communication to the server may be analyzed on the server-side or the client-side. This may depend on the limitations of the service. On the server-side the RTT may be determined using raw packet analysis of the TCP handshake and further TCP communication (i.e., analysis of the probing signal). On the client-side JavaScript may be used to communicate with the server and calculate the RTT. Using JavaScript allows to analyze more communication in a controlled fashion for more accurate results.

In a client vs probes RTT analysis block 470, the client-server value (i.e., the client-server RTT) and the server-probe value (i.e. the server-probe RTT) may be compared and analyzed. The RTTs may be compared using, for example, Equation 2 above.

In a VPN detection result + confidence level block 480, a result of whether an intermediary connection (i.e., a VPN) is being used may be determined. The result may be a binary result, e.g VPN being used, or VPN not being used. It may be determined that a VPN is being used if the client-server RTT is greater than the server-probe RTT. As above, the result may be determined using Equation 2.

Along with the determination, a confidence level/score may also be calculated. For example, the confidence score in Equation 3 or 4 may be calculated. The confidence level may be directly related to the number of standard deviations the difference in the RRTs is equal to.

While the actions performed by each block above are described sequentially, the blocks may be executed in any suitable order/may be executed simultaneously. For example, the client-server RTT may be calculated and then the server-probe RTT may be calculated or the RTTs may be determined simultaneously.

While the method is described in relation to detecting the use of a VPN, the method may be adapted to identify other types of proxied communication (/intermediary connection) including proxies/Tor/Tunneling solutions depending on the technology used. Furthermore, the probes themselves may be used for active geolocation purposes depending on the amount of control/access available to the probes.

The method described herein takes an active approach to VPN detection while solving the issue of VPNs being purposely hidden. The method may not rely on previous knowledge or ranks of the connection IP of a device, and thus may be significantly more reliable and accurate than existing methods. The method may use an aggregation of delay measurements from probes that are geolocated near a source IP (i.e. a perceived indication information). The measurements may be used to identify discrepancies in delays that are caused from communication that is tunneled through a VPN.

Unlike other solutions, probes that are distributed worldwide may be used to detect additional delays, which allow for the detection of VPN servers based entirely on current behavior and do not require previous knowledge. Leveraging probes (which are trusted/ under control) for VPN Detection minimizes the need for interaction with the client or the VPN Server. In most cases the VPN will be unresponsive to direct probing (e.g. VPNs are purposely hidden). Thus, the method disclosed herein may provide an increased reliability and accuracy compared to other known solutions. Furthermore, the method may detect previously unknown VPNs immediately, where methods using ranks and stored IP addresses would fail to do so.

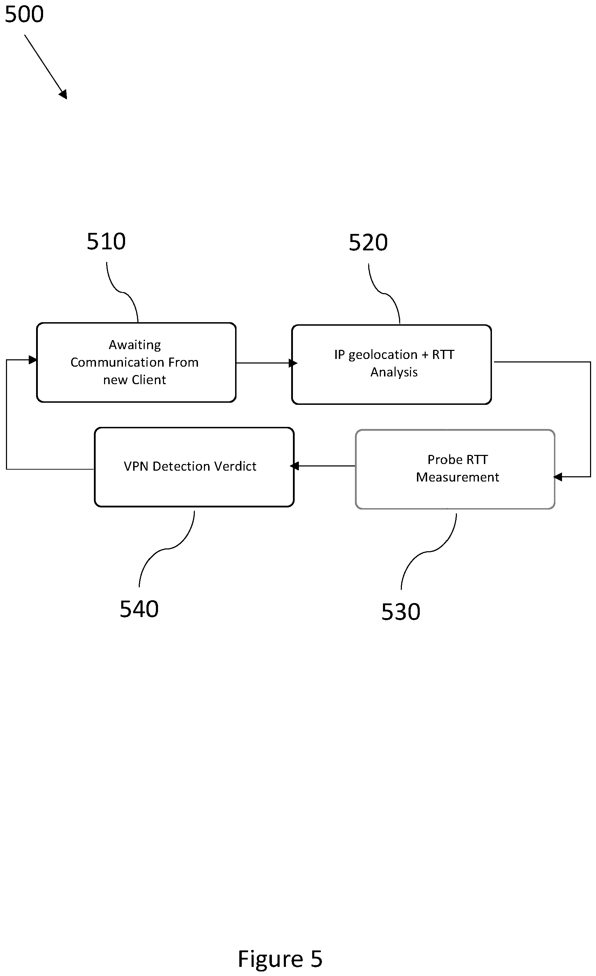

**Figure 5** shows a state diagram showing different states of a system/apparatus performing a method described herein. An example of an implementation of the method is described in relation to the state diagram.

In an 'Awaiting Communication From new Client' block 510, a server may be in an idle state. That is, the server may be ready to be queried by a client device. The server may be a web server with the following credentials:

- IP: 20.117.181.32

- geolocation: London, England "51.5085,-0.1257"

The geolocation of the server may be known or may be determined using the IP address of the server.
In an 'IP geolocation + RTT Analysis' block 520, the server may receive the IP address (or perceived IP address) of the client device. In this example, the client device is routed through an intermediary connection, and in particular a VPN. The server may receive the perceived IP address of the client device (I.e. the VPN IP address and) and the IP address may be geolocated. The IP address may be geolocated by the server or may be forwarded/transmitted to another system/-apparatus to geolocate. The VPN may have the following credentials:
VPN Server:

- ip: 20.67.232.30
- geolocation: Dublin, Ireland "53.3331,-6.2489"

The client device may sent a connection signal which may be used to determine an RTT time. The RTT may be determined from more than one connection signal by taking the mean value calculated for each probing signal.
In a probe RTT measurement block 530, the system may determine/select a probe or probes within a threshold distance of the geolocation. Additionally or alternatively, the system may select a probe or probes from one or more probes which are closest to the geolocation. The system may start communication with the probes (e.g., wireless communication) and obtain (an) IP address of the probe(s). In this example one probe was used. As the perceived IP address obtained from the client device originated from Dublin, Ireland, the system selected a probe in the same geographical area. The credentials of the probe are as follows:
Probe:

- ip: 20.67.232.30
- geolocation: Dublin, Ireland "53.3331,-6.2489"

As described herein, the probe may be probed with a probing signal to determine an RTT associated with the probe at that geolocation (a server-probe RTT).
In this example, the client may be in Israel but its location will not be detected or used.
In a VPN detection verdict block 540, the system may decide whether the client device is using a VPN connection when communicating with the server. The system may use the following information, determined in the above blocks, in the decision.

| | |
|---|---|
| $CS_{RTT}$ | 181.3 ms |
| $LS_{RTT}$ | 23.21 ms |
| std | 25 ms |
| C | 0.2 |
| $D_{cp}$ | 0 |
| GE | 50 km |
| $\omega$ | 199.86 km/ms = 2/3 c |

The variables in the table are defined in relation to Figure 2 and are repeated as follows: CS_RTT is the (median) RTT associated with a probing signal transmitted between the server and the client device; LS_RTT is the aggregated RTT between the probe(s) and the server; std is the standard deviation of LS_RTT, C is a constant (between 0 and 1), which may be varied depending on how strictly the threshold should be set (and/or may be based on the size of LS _RTT) ; D_cp is the distance between the geolocation associated with the perceived indication information (e.g. the IP address of the VPN in this example) and the probe, GE is the geolocation expected Error based on geolocation method used to determined the geolocation from the IP address; $\omega$ is the expected propagation speed of a signal transmitted between the server and the client device, based on the geolocated region associated with the perceived indication information. The expected propagation speed may be a known value used as an approximation for the maximum propagation speed possible in modern networks.

Using Equation 2 above, the system may arrive at the following result and confidence level:

$$181.3 > 23.21 + 0.2 \cdot 23.21 + \frac{50}{199.86} = 28.10$$

$$Confidence = \min\left(\frac{181.3 - 23.21 - 0.25}{0.2 \cdot 23.21}, 1\right) = \min(34.00, 1) = 1$$

As can be seen from the result, even though the probe and the VPN server were geolocated to essentially the same place, the RTT of the communication is significantly different because the client behind the VPN Server adds an additional significant delay (as expected). Thus, the system may detect that the connection between the client device and server is routed through the VPN.

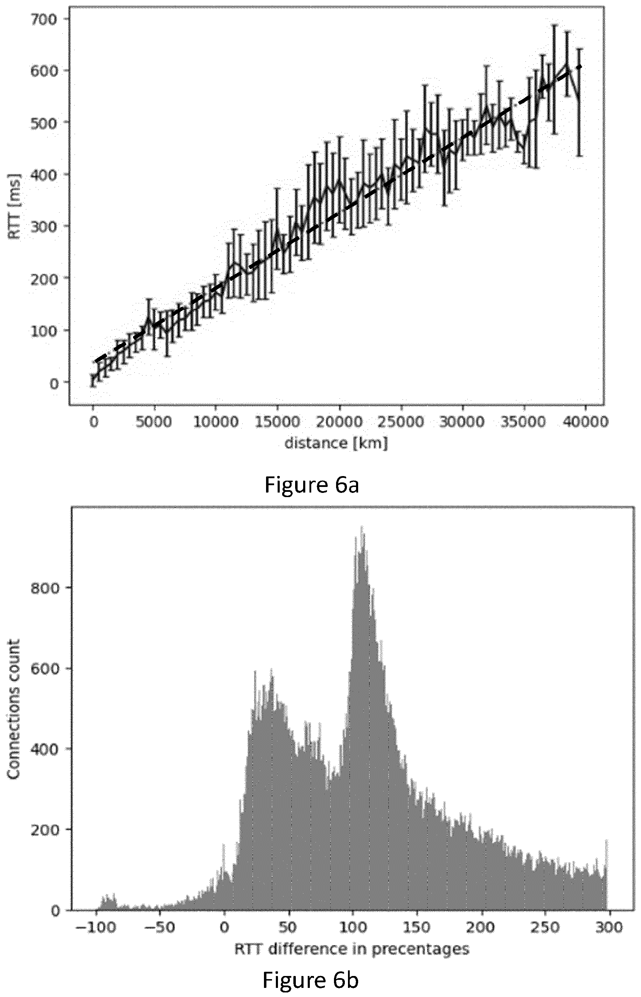

**Figures 6a- 6f** show experimental results from using a method disclosed here.

To prove the efficacy of the method disclosed herein, the inventors tested on multiple well known VPN Services (NordVPN, PIA, ExpressVPN). Each Service uses slightly different implementations of the known state of the art solutions which are:

- OpenVPN: Robust and mature open-source protocol that is the industry standard (OPENVPN protocol RFC https://openvpn.net/communityresources/openvpn-protocol/ (accessed March. 12, 2024)
- IKEv2/IPSec focuses on security with its use of strong cryptographic algorithms IKEv2 protocol RFC https://datatracker.ietf.org/doc/html/rfc5996 (accessed March. 12, 2024)
- WireGuard/NordLynx/lightway are still experimental but are already in use because of their excellent security and improved speed WireGuard protocol https://www.wireguard.com/papers/wireguard.pdf (accessed March. 12, 2024), Nordlynx protocol https://nordlayer.com/blog/nordlayer-introducesnordlynx-protocol/ (accessed March. 12, 2024), expressvpn lightway protocol https://www.expressvpn.com/lightway (accessed March. 12, 2024).

The method disclosed herein was tested on each service as well as each available protocol.

The client/server locations were diversified by setting up multiple azure/aws virtual machines (VMs) in different regions around the world. Three servers and VPN clients were set up using Azure (located in the UK, US, and Singapore) and 20 direct clients were set up in Azure/AWS. For the direct clients, the inventors were limited by the amount of available regions in cloud environments. Due to the direct client limitation, the VPN clients were limited as well to keep the detection ratios relevant. The large amount of available VPN locations assured that using 3 clients was adequate to generate a sufficient amount of unique detection conditions. The detection server included a simple flask web server flask python https://flask palletsprojects.com/en/3.0.x/ (accessed February. 25, 2024) with an additional packet sniffing script that communicates the results with the detection server. Both were implemented using Python3. The geolocation service used was the ipinfo geolocation API (ipinfo geolocation service https://ipinfo.io/products/ip-geolocationapi (accessed March. 12, 2024). The detection method was run entirely separate from any service running on the (web) server but was configured to run alongside the server with packet sniffing privileges. To accommodate connections to VPN Services from remote machines as well as maximizing the authenticity of the connection, the inventors created an automation script using selenium with a Chrome-Driver and the various VPN services and Linux client applications. Every few seconds the client script was configured to connect to a random VPN Server from the chosen VPN services and accesses the detection servers using Selenium. The client sends the original IP of the client as well as the service and protocol used. This information was used for validation of detection results and further analysis. The direct clients used the same chrome-based system but over direct connections.

The inventors identified the following possible experimental limitations of the reliability, and connections:

- RIPE Atlas probe reliability: The Atlas probes may be controlled by a third party and therefore may not be under direct control, and their set up conditions may vary. Therefore, the probes may not be necessarily reliable and might have significant lag relative to the expected communication delay of their area. To account for this, areas/regions or probes with a statistically significant variance or increased lag/deviation in latency compared to expected communication times may be detected and filtered out and/or addressed over time.

Other considerations:

- Skewed dataset: The inventors found that the most significant factor in a client is its physical location. Multiple VPN services were used which gave access to tens of thousands of servers in a wide range of locations worldwide. No such (legal) service exists for direct clients. Thus, the inventors used the regions available in azure/aws cloud services to set up direct client. The inventors tested the method using the available cloud services.

- Geolocation reliability/spoofing: The method discloses herein uses passive IP geolocation technology. The speed and accuracy of these service may have an effect on the measurement. The inventors found that for most error ranges of up to 100km the RTT difference would likely be insignificant, but in cases of more severe errors or even spoofing detection results may be affected.
- Client geographical distribution: The clients used by the inventors were located in cloud data centers whose distribution was geographically is limited.

The inventors found that each VPN client connects in varying intervals to a random configuration of service, protocol, and available region (the timing varies per service used, for example NordVPN requires a longer timeout because of automatic throttling). The direct clients made a new connection every 40 minutes, this generates useful direct connection data with the known limitation of available locations. The network state (e.g., congestion) may vary over time based on multiple conditions, which makes data collection in this way useful for analysis even if its not ideal. Data was collected from [13 February 2024] to [18 April 2024] and over 160k connections with over 32k unique IPs and corresponding locations were analysed. The data was saved in an Azure SQL server, each detection was given a unique record in a detection information table and a client connection information table, which was then joined for analysis (the detection mechanism had no access to client data).

Each connection from the clients may include unique fields and only those were added to the client database. With this method, detection's that were not triggered by the clients were filtered out. The sniffing tool was configured to restart every 15 minutes and, during that time frame, limit each unique IP to one detection.

A useful correlation to validate the initial assertion was the distance traveled to measured client-to-server RTT, as visualized in Figure 6a, a graph of aggregated endpoint distance (client- VPN-server) vs measured client RTT with standard deviation errors. The correlation had a good linear fit ($R^2$ of 0.96), this result validated the initial assertion that the total distance traveled between the endpoints is the most significant contributor to the RTT of the communication.

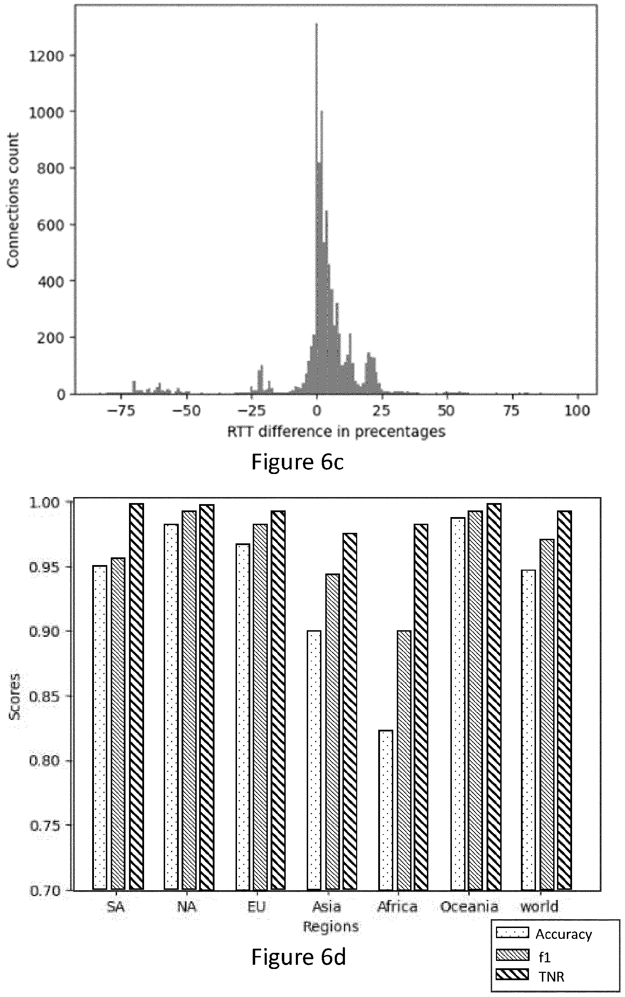

Based on the same assertion, it was expected that there would be a significant difference in measured RTT between the client and landmark when a VPN is used, and a minimal difference for direct connections. A histogram of the RTT differences of VPN connections is visualized in Figure 6b, RTT difference between VPN and (SNITCH) landmark communication, and the direct connections are in Figure 6c, RTT difference between direct client and (SNITCH) landmark communication (where SNITCH stands for Server- side Non-intrusive Identification of Tunneled Characteristics, and refers the method disclosed herein). The relative RTT difference ratio was calculated as $(CS\_RTT - LS\_RTT)/LS\_RTT$. A significant difference between VPN and direct connections can be seen in the Figures. VPN connections have a median RTT difference of 124% and a median RTT difference of 2% for direct communication. With further analysis, the inventors found that more than 97% of VPN connections have at least a 10% relative difference in RTT, whereas for direct communication only 0.6% have such a difference. As expected, the RTT difference for direct communications is close to zero and is much more significant for VPN communication.

As shown in Figures 6b and 6c, some of the measured RTT differences returned negative values. These are rare cases of extensive network delays for the landmarks communication which can be caused by random packet drops or congestion, for example. The fact that negative values exist shows the effect of significant (and quite rare) network delays.

Analysis of the detection results with consideration for the skewed dataset (as previously stated) with many more unique VPN connections than direct connections was performed using accuracy, F1, and the True Negative Rate (TNR) as metrics for the detection rate. Furthermore, network infrastructure below modern standards in the client or VPN region of the VPN server was found to have a significant effect on the detection method. Therefore, the detection confusion matrix for each continent was analysed. The detection performance metrics are visualized for each continent, see Figure 6d: Detection metric scores based on VPN and direct client locations, the metric scores used are accuracy, F1 and TNR. The effect of the network infrastructure in less developed regions (South America, parts of Asia, Africa) can be clearly seen from the data. Furthermore, a significant increase in reliability can be seen in the more developed regions (North America, Europe, Oceania) which demonstrated good performance, achieving an accuracy rate of over 95.

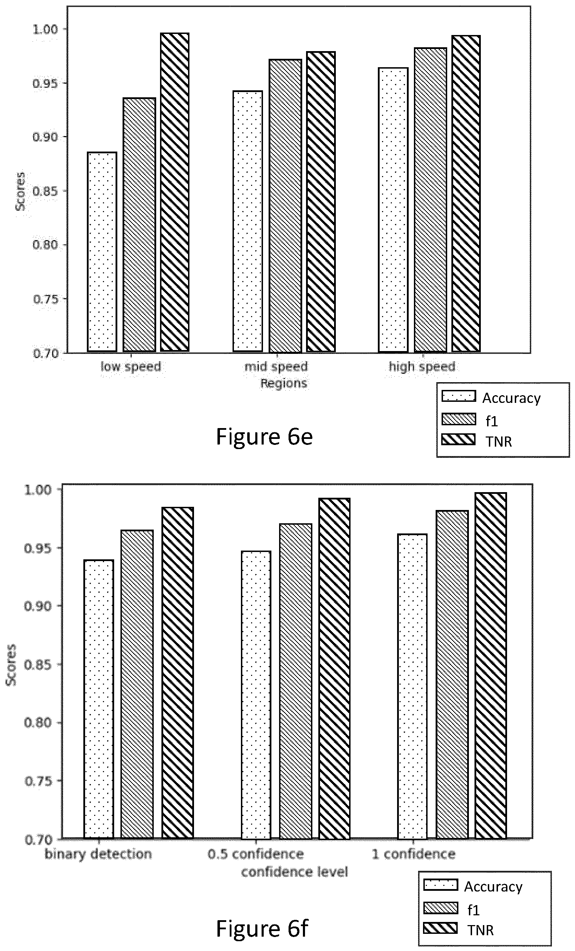

Another way to visualize the network-infrastructure effect is a comparison of the detection metrics shown in Figure 6e, Median download speed detection metric scores, the metric scores used are accuracy, F1 and TNR, and based on the speedtest.net median download speed analysis. The inventors categorized countries with over 100MB download speeds as high-speed, over 60 as mid-speed, and under 60 as low-speed. The effect of slower infrastructure can be clearly seen in this visualization as well. It may be difficult to determine what is the direct cause of the unreliability in these regions. The VPN/client dataset discussed herein may not be entirely representative of each region and the problems may be caused by specific Atlas probe malfunctions or connectivity issues.

As an additional factor to the binary detection value, the confidence value may be used to set detection thresholds. Performance matrices for binary detection were generated, 0.5 confidence and full confidence, each can be seen in Figure 6f (Detection confidence threshold metric score comparison, the metric scores used are accuracy, F1 and TNR.).

The inventors found that increasing the confidence threshold improved detection performance, but detection entries whose confidence values don't meet the specified confidence threshold are discarded. Detection with 0.5 confidence for all communications gives results of accuracy: 0.945, F1: 0.971, TNR: 0.992 detection with 0.5 confidence for countries with high speed networks gives results of accuracy: 0.961, F1: 0.979, TNR: 0.993. The inventors did not find statistically significant differences in detection rates between the tested services, or when different protocols are used These results (with acknowledgment of the experiment limitations) show that Server-side VPN Detection using geolocated landmarks RTT measurement is effective and a viable option for security services.

The method disclosed herein provides a VPN (i.e., intermediary connection) detection based on RTT measurement and IP geolocation. This method focused on VPN detection but may be used to detect any kind of "proxy" (Proxy, VPN, SSH forwarding, TOR, etc.). The initial assertions of direct correlation between distance travelled and RTT and the following significant difference between the RTT of the VPN and direct communication hold true. As previously stated, the detection method may not require a significant change to existing services. For example, only multiple initial connections may be used (e.g. TCP and TLS, with this requirement being met in most servers with JavaScript/image/icon loading).

The method may provide the ability to run an additional sniffing tool and detection server which may be implemented as simple add-ons with no effect on the original server.

The method described herein relates to VPN detection. However, the method may be used for any connection technology that involves any kind of "Proxy" (Proxy, VPN, ssh forwarding, TOR, etc). Ideally a full VPN detection service may have an aggregation of multiple existing solutions. A hybrid (passive and active) approach may increase confidence in the detection results and improve over time.

The method herein has been shown to be consistent across different services, protocols and modern network infrastructures. A potential limitation for the detection method disclosed herein is insufficient distance. As shown, RTT may be directly correlated to distance traveled. Therefore, in instances when the client and VPN Server (or VPN and Server) are very close geographically (i.e. in the same city/region) it may be difficult to detect the VPN usage withing a suitable margin of error that addresses standard network jitter and congestion. Geolocation based domain name system (DNS) entries and diversified server locations may be used to ensure ideal conditions for detection for every direct client and improve conditions for VPN clients (the distance between the client and VPN is typically inaccessible to the detection server) without affecting user experience. However, if the VPN server is geographically close to the client, The IP geolocation will likely generate a reasonably accurate geolocation for most security or regulation purposes.

Another identified potential limitation is Network Infrastructure: Based on the experiment measurements, the inventors found that countries with a slower median download speed have significant deviations in network delay and seem to have a significant difference in delay between residential and corporate network connections. This may be due to outdated network infrastructure, which can cause high packet drop rates and a low bandwidth. Above a certain threshold detection may become unreliable. Implementations of the method disclosed herein may manually filter out regions with slower download speeds or other relevant metrics to increase reliability. Prior detection of slow/outdated network infrastructure based on prior knowledge or measurement variance may be used to trigger more measurements, harming the user experience but ensuring security. This method could also be used to detect malfunctioning landmarks.

The method described herein provides method to detect VPN connections on the server-side. The detection method may use real-time TCP/TLS handshake RTT measurement as well as direct RTT measurement from geolocated landmarks. This method may have a simple implementation and has been shown to be effective on some of the world's most popular VPN services with an overall accuracy of over 94% and 96% accuracy in modernized network infrastructure.. Further steps were discussed to improve detection rates and ensure detection conditions.

**Figure 7** shows plots of RTT ratio between VPN/direct clients and landmark communication, aggregated over 10ms intervals. The graphs were aggregated over 10ms for deviation analysis and clarity.

To determine an error margin (e.g. for use in Equation 2 above), the relative difference of the measured RTT between the client and landmark communication for both the direct and VPN communications were analysed. The inventors found that there was not a constant difference between the landmark and client RTT and a relative margin approach was more likely to generate accurate detections.

The graphs in Figure 7 show the ratio with directional deviation analysis to find an accurate margin. VPN communication has a ratio of at least 0.3 for all communications in one directional standard deviation from the mean. For directional deviations of direct client communications a drop from 0.3 ratio for small RTTs to around 0.1 for large RTTs was observed.

For the purposes of accurate VPN detection, minimizing False Negatives was decided to be more important than allowing some False positives. Therefore, the margin of error was fit as close as possible to the direct communication upper limit. The best fit found by the inventors was a logarithmic function. Of course, other functions may be used and may depend on the probe/landmark - server RTT reliability.

The logarithmic function was used with a lower bound of 0.1:

$$C = \max(0.48841997 - 0.07773669 * \log(CS\_RTT), 0.1)$$

The lower bound was chosen to account for standard jitter in internet communication which was found to become less significant over large RTTs and may be accounted for over smaller RRTs.

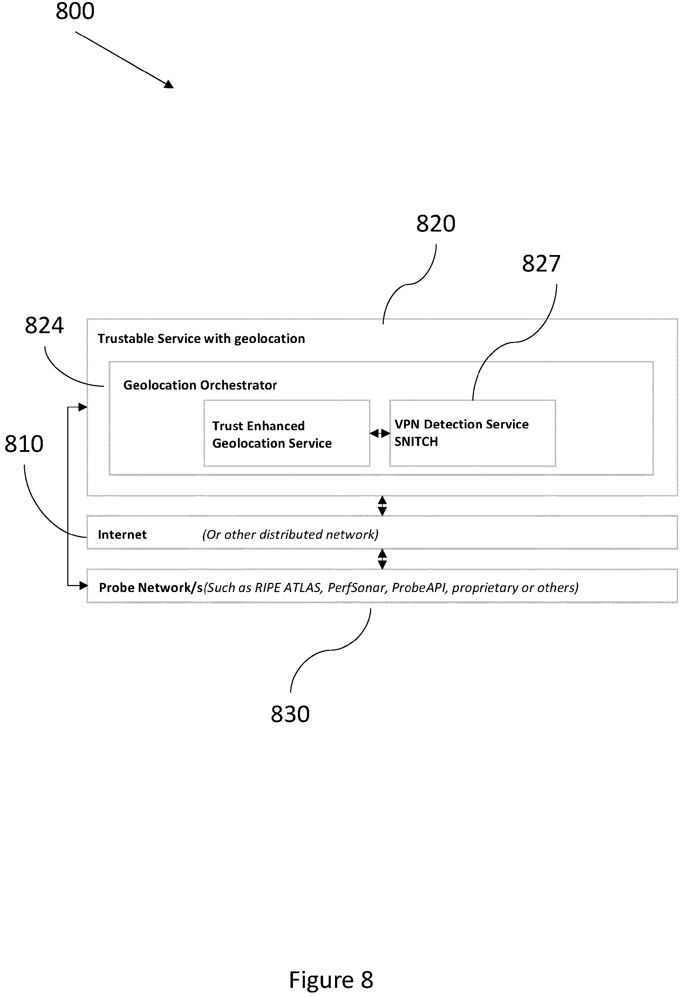

**Figure 8** shows an architecture 800 for implementing a method disclosed herein. As described above, a client device may be in communication with a web server. The web server may be connected to a network 810 such as the internet or any other distributed network.

The sever may obtain the IP address of the client device. The IP address may be a public IP address of the client device (which may be referred to as an external IP address). A public IP address may be an IP address which can be directly accessed over the internet. The public IP address may be assigned to, for example, a network router by an internet service provider (ISP). The client device may communicate with the network router via a private IP address. The private IP address may be shared with the network router but remain private, or hidden, from public or external networks (i.e., the internet).

The (public) IP address may be indicative of location of the client device. A trustable service with geolocation 820 may obtain a geolocation of the client device using the public IP address. As discussed above, the IP address may be referred to as perceived indication information as the web server receiving the IP address may not know if the IP address originated from the client device or is routed through an intermediary connection.

An apparatus performing the method described herein, for example a detection server, may have a geolocation orchestrator 824. The geolocation orchestrator may be a block of code running the IP geolocation service. The geolocation orchestrator may link the trust enhanced geolocation service with the VPN detection service 827. In this example the VPN detection service has been named "SNITCH (Server-side Non-intrusive Identification of Tunneled Characteristics).

To detect the use of a VPN, the method may use a probe, or probe network 830. Once a geolocation of the IP address has been obtained, a probe or more than one probe nearest the geolocation may be activated. Examples of probes which may be used are RIPE ATLAS, PerfSonar, ProbeAPI, proprietary probes or others. The RTT of a probing signal sent between the server and the probe may be determined. Thus, as described in connection with Figure 2, it may be determined if a client device is using an intermediary connection.

The proposed 'SNITCH' (Server-side Non-intrusive Identification of Tunneled Characteristics), method for detecting the use of a VPN, may be performed without requiring intrusive software running on the client. The method aligns with the theme of trust-enhanced networking and robust localization. In particular, robust localization may increase the trust in networking through leveraging physical features (i.e. geolocation). IP geolocation and trusted ground truth landmarks, paired with communication delay measurement, may be used to accurately detect VPN and Proxy Usage. The measurement may be performed in real-time upon the inception of the connection to the server. The measurement may be performed on a detection server running alongside the server. This method may allow for seamless integration of VPN Detection into the authentication process with little to no effect on the client experience. The results discussed in relation to Figures 6a-6f show that SNITCH is able to detect VPN usage with an accuracy of over 96% in regions with modern network infrastructure and sustains an accuracy of 94% over all measured regions.

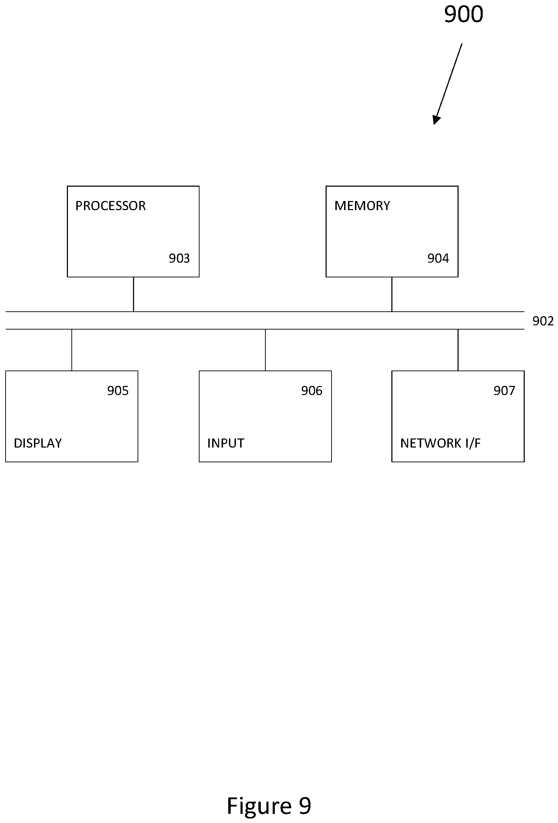

**Figure 9** is a block diagram of an information processing apparatus 900 or a computing device 900 or server 900, such as a (data storage) server, which embodies the present invention, and which may be used to implement some or all of the operations of a method embodying the present invention, and perform some or all of the tasks of apparatus of an embodiment. The computing device 900 may be used to implement any of the method steps described above, e.g. any of steps S10-S50, for example.

The computing device 900 comprises a processor 903 and memory 904. Optionally, the computing device also includes a network interface 907 for communication with other such computing devices, for example with other computing devices of invention embodiments. Optionally, the computing device also includes one or more input mechanisms such as keyboard and mouse 906, and a display unit such as one or more monitors 905. These elements may facilitate user interaction. The components are connectable to one another via a bus 902.

The memory 904 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S10-S50. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 903 is configured to control the computing device and execute processing operations, for example executing computer program code stored in the memory 904 to implement any of the method steps described herein. The memory 904 stores data being read and written by the processor 903 and may store at least one IP address-geolocation database, probe database (i.e. a database of available probes/nodes), and/or equation (e.g., equations 1, 2 and/or 3), and/or any block described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 903 may be considered to comprise any of the blocks, or units, or modules, described above. Any operations described as being implemented by a block may be implemented as a method by a computer and e.g. by the processor 903.

The display unit 905 may display a representation of data stored and/or generated by the computing device, such as determination of whether a connection between a client device and a server is routed through an intermediary connection. The output may be shown as GUI windows and/or interactive representations enabling a user to interact with the apparatus 900 by e.g. selection interaction, input text boxes, and/or any other output described above, and may also display a cursor and dialog boxes and screens enabling interaction between a user and the programs and data stored on the computing device. The input mechanisms 906 may enable a user to input data and instructions to the computing device. For example, the display unit may display a GUI including a User panel, or input space, for the user to interact. The user may input a query whether a connection is routed through an intermediary device. The user may interact with the GUI and display to generate and view a determined answer. Of course, the method may be performed automatically without interaction with a user.

The network interface (network I/F) 907 may be connected to a network, such as the Internet, and is connectable to other such computing devices and/or servers via the network. The network I/F 907 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus/server 900 such as that illustrated in Figure 9. Such a computing device need not have every component illustrated in Figure 9 and may be composed of a subset of those components. For example, the apparatus 900 may comprise the processor 903 and the memory 904 connected to the processor 903. Or the apparatus 900 may comprise the processor 903, the memory 904 connected to the processor 903, and the display 905. For example, the functions and/or architecture described in relation to Figures 4 and 5, may be stored in the memory and/or the method described in relation to Figure 2 may be stored in the memory. The processor may be configured to perform the method stored in the memory using, for example, the functions and/or architecture stored in the memory.

A method embodying the present invention may be carried out by a single computing device/server in communication with one or more (data storage) servers via a network. The computing device may be a data storage itself storing at least a portion of the data. The functions and/or architecture and/or method may be stored on the one or more data storage servers and the processor in the computing device may be configured to carry out the method steps. As an example, step S10 in Figure 2 may be performed by a (web-)server receiving indication information from a client device. The server may forward/transit the indication information to the computing device/apparatus/server (i.e., a detection server) 900 which may perform the remaining method steps S20-S50. Alternatively, the method steps S 10-S50 may be performed by the (web-)server.

A method embodying the present invention may be carried out by a plurality of computing devices operating in cooperation with one another. One or more of the plurality of computing devices may be a data storage server storing at least a portion of the data. For example, IP address-geolocation database and/or probe database may be stored on a separate server from other blocks, units or modules.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Claims**

1. A computer implemented method for detecting an intermediary connection in a network comprising:
   receiving, at a server, perceived indication information of a client device;

   obtaining a geolocation associated with the perceived indication information;
   determining a client-server value based on a transmission time of a connection signal transmitted between the client device and the server;
   determining an expected value associated with the geolocation;
   establishing that a connection between the client device and server is routed through the intermediary connection if the client-server value exceeds a threshold value, the threshold value being at least partly based on the expected value.

2. The method according to claim 1, wherein the expected value is an expected round trip time of a notional signal sent between the server and a notional device at the geolocation and is determined from the geolocation and a propagation speed of the notional signal and/or wherein the expected value is a server-probe value associated with a transmission time of a probing signal transmitted between the server and a probe, the probe being a closest probe to the geolocation selected from one or more probes.

3. The method according to any preceding claim, wherein the client-server value comprises a client-server round-trip time of the connection signal.

4. The method according to any of claims 2 to 3, wherein the expected value comprises a server-probe round trip time of the probing signal transmitted between the server and the probe.

5. The method according to any preceding claim, wherein the perceived indication information is an internet protocol (IP) address and/or wherein the connection signal transmitted between the client device and the server is at least one of a transmission control protocol, TCP, handshake signal, a secure sockets layer, SSL, handshake signal and a transport layer security, TLS, handshake signal.

6. The method according to any of claims 4 to 5, wherein another connection signal is transmitted, and the client-server value is based on a transmission time of the another connection signal.

7. The method according to claim 6, wherein the connection signal is a TCP handshake signal and the another connection signal is at least one of a TLS handshake signal and an SSL handshake signal and/or wherein the client-server value comprises an average round-trip time, the average client server round trip time being the average of the client-server round-trip time of the connection signal and another round-trip time of the another connection signal.

8. The method according to any preceding claim wherein the connection signal is separated into different packets and the packets are transmitted separately.

9. The method according to any preceding claim, wherein the client-server value is further associated with a cipher signal round trip time between the server and the client device and optionally wherein the client-server value is calculated from an average comprising the client-server round-trip time and the cipher signal round trip time.

10. The method according to claim 9, wherein during cipher negotiation with the client device, the server is configured to reject a cipher configuration suggested by the client and determine a cipher round-trip time from further ciphers sent by the client device, preferably wherein the further ciphers are sent using "ChangeCipherSpec" packets.

11. The method according to any of claims 2 to 10, wherein the probing signal is an internet control message protocol (ICMP) Ping, transmission control protocol (TCP) handshake, or transport layer security (TLS) handshake and/or wherein the expected server value comprises a further server-probe value associated with a second probe.

12. The method according to any preceding claim wherein the threshold value is determined using at least the equation:

$$LS_{RTT} + C \cdot LS_{RTT} + \frac{D_{cp} + GE}{\omega}$$

wherein $LS_{RTT}$ is the expected value, C is a constant preferably between 0 and 1, or C is a relative error margin of detection of $LS_{RTT}$, D_cp is a distance between the geolocation associated with the perceived indication information and the probe or the notional device, GE is a geolocation expected error associated with determining the geolocation, and $\omega$ is an expected propagation speed of a signal transmitted between the server and the client device and preferably wherein a confidence level associated with the threshold value is calculated as

$$Confidence = min\left(\frac{CS_{RTT} - LS_{RTT} - \frac{D_{cp} + GE}{\omega}}{C \cdot LS_{RTT}}, 1\right)$$

or

$$Confidence = \frac{CS_{RTT} - LS_{RTT} - \frac{D_{cp} + GE}{\omega}}{C \cdot LS_{RTT}}$$

13. The method according to any preceding claim wherein the intermediary connection is a virtual private network connection, a tor connection, a proxied connection or a tunneling connection.

14. A computer program which, when run on a computer, causes the computer to carry out a method for detecting an intermediary connection in a network comprising:

    obtaining a geolocation associated with the perceived indication information;
    determining a client-server value based on a transmission time of a connection signal transmitted between the client device and the server;
    determining an expected value associated with the geolocation;
    establishing that a connection between the client device and server is routed through the intermediary connection if the client-server value exceeds a threshold value, the threshold value being at least partly based on the expected value.

15. An information processing apparatus for detecting an intermediary connection in a network comprising a memory and a processor connected to the memory, wherein the processor is configured to:

    obtain a geolocation associated with the perceived indication information;
    determine a client-server value based on a transmission time of a connection signal transmitted between the client device and the server;
    determine an expected value associated with the geolocation;

establish that a connection between the client device and server is routed through the intermediary connection if the client-server value exceeds a threshold value, the threshold value being at least partly based on the expected value.

Figure 1a

Figure 1b

200

S10

Receiving, at a server, perceived indication information of a client device;

S20

obtaining a geolocation associated with the perceived indication information;

S30

determining a client-server value based on a transmission time of a connection signal transmitted between the client device and the server;

S40

determining an expected value associated with the geolocation;

S50

establishing that a connection between the client device and server is routed through the intermediary connection if the client-server value exceeds a threshold value, the threshold value being at least partly based on the expected value.

Figure 2

Figure 3

400

410

Client
communication

*VPN Detection*

450

420

IP Geolocation

Client
Communication
Collection

*Probe Measurement Process*

430

Probe Selection

460

Client
RTT Measurement

*Communication RTT Extraction*

Probe(s) execute
RTT Measurement

440

Client vs Probes
RTT Analysis

VPN Detection Result +
Confidence Level

470

480

Figure 4

500

510                                                    520

```
        Awaiting                              IP geolocation + RTT
   Communication From                               Analysis
      new Client
```

```
   VPN Detection Verdict                         Probe RTT
                                               Measurement
```

540                                                    530

Figure 5

Figure 6a

Figure 6b

Figure 6c

Figure 6d

Figure 6e

Figure 6f

Figure 7

800

820

827

824

**Trustable Service with geolocation**

**Geolocation Orchestrator**

| Trust Enhanced Geolocation Service | ◄► | VPN Detection Service SNITCH |

810

**Internet** *(Or other distributed network)*

**Probe Network/s** *(Such as RIPE ATLAS, PerfSonar, ProbeAPI, proprietary or others)*

830

Figure 8

900

PROCESSOR

903

MEMORY

904

902

905

DISPLAY

906

INPUT

907

NETWORK I/F

Figure 9

Europäisches
Patentamt
European
Patent Office
Office européen
des brevets

# EUROPEAN SEARCH REPORT

**Application Number**

EP 25 16 0117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/350160 A1 (NATHAN AVIHAY [US] ET AL) 3 December 2015 (2015-12-03) <br> * abstract * <br> * paragraph [0040] - paragraph [0054] * <br> * figure 4 * <br> ----- | 1-15 | INV. <br> H04L9/40 |
| X | US 11 196 712 B1 (NORBUTAS EMANUELIS [LT]) 7 December 2021 (2021-12-07) <br> * abstract * <br> * column 1, line 53 - line 67 * <br> * column 7, line 66 - column 8, line 36 * <br> * column 16, line 62 - column 17, line 56 * <br> * figure 3 * <br> ----- | 1-15 | |
| A | US 2024/250847 A1 (BARRY CHARLES F [US] ET AL) 25 July 2024 (2024-07-25) <br> * abstract * <br> * paragraph [0091] - paragraph [0093] * <br> * paragraph [0103] - paragraph [0106] * <br> * figures 2, 7 * <br> ----- | 1-15 | |
| A | ZACHARY WEINBERG ET AL: "How to Catch when Proxies Lie", 20181031; 1077952576 - 1077952576, 31 October 2018 (2018-10-31), pages 203-217, XP058419087, DOI: 10.1145/3278532.3278551 ISBN: 978-1-4503-5619-0 <br> * the whole document * <br> ----- | 1-15 | **TECHNICAL FIELDS SEARCHED (IPC)** <br><br> H04L |

The present search report has been drawn up for all claims

| Place of search | Date of completion of the search | Examiner |
|---|---|---|
| The Hague | 8 August 2025 | Poppe, Fabrice |

EPO FORM 1503 03.82 (P04C01)

## ANNEX TO THE EUROPEAN SEARCH REPORT
## ON EUROPEAN PATENT APPLICATION NO.

EP 25 16 0117

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2025

| Patent document cited in search report | | Publication date | Patent family member(s) | | Publication date |
|---|---|---|---|---|---|
| US 2015350160 | A1 | 03-12-2015 | US 2015350160 A1 | | 03-12-2015 |
| | | | US 2019075131 A1 | | 07-03-2019 |
| US 11196712 | B1 | 07-12-2021 | NONE | | |
| US 2024250847 | A1 | 25-07-2024 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- BADPASS: Bots Taking ADvantage of Proxy as a Service. **CHIAPPONI, E.** ; **DACIER, M.** ; **THONNARD, O.** ; **FANGAR, M.** ; **RIGAL, V.** Information Security Practice and Experience. ISPEC, 2022
- Lecture Notes in Computer Science. Springer, vol. 13620

- **HOOGSTRAATEN, H.** Evaluating server-side internet proxy detection methods (Msc Thesis). 2018
- **A. T. WEBB** ; **A. L. NARASIMA REDDY**. Finding proxy users at the service using anomaly detection. *2016 IEEE Conference on Communications and Network Security (CNS), Philadelphia, PA, USA*, 2016, 82-90